# EUROPEAN PATENT APPLICATION

(11) **EP 2 544 437 A1**
(43) Date of publication of application: **09.01.2013**
(21) Application number: 12169097.8
(22) Date of filing: 23.05.2012
(51) Int. Cl.: H04M 3/42, G06F 17/30, H04L 12/58, H04W 4/18

(54) **Apparatus and method for transmitting message in mobile terminal**

(30) Priority: 06.07.2011 KR 20110066755
(71) Applicant: Samsung Electronics Co., Ltd., Suwon-si, Gyeonggi-do, 443-742 (KR)
(72) Inventor: Choi, Chul-Min, 443-742 Gyeonggi-do (KR)
(74) Representative: Hutter, Jacobus Johannes

(57) **Abstract**

An apparatus and a method for writing a message and transmitting the same in a mobile terminal are provided. A keyword analyzer analyzes an input keyword written in a messaging window. A clip manager retrieves contents corresponding to the analyzed input keyword from pre-stored contents, and extracts and stores the retrieved contents as a multimedia clip that may be included within the message in place of the keyword. The contents can be music / video files pre-stored in the mobile terminal or stored on a remote server. The extracted multimedia clip corresponds to a portion of the music / video contents containing the keyword.

## Description

### BACKGROUND

### 1. Technical Field

The present disclosure relates generally to mobile terminals and more particularly to an apparatus and a method for writing a message and transmitting the same in a mobile terminal.

### 2. Description of the Related Art

As mobile terminals have advanced technologically in recent years, smart phones, tablet PCs and the like have proliferated and have become daily necessities throughout the world. As technology has developed and wireless Internet introduced, the mobile terminal has expanded its functionality and is now used for diverse activities in addition to the traditional telephone communication. Examples include music and video playing, email, on-line gaming, text messaging, remote control operations using short distance communication, and digital photography.

Of the relatively new mobile terminal functions, the short message function (e.g., text messaging) has the advantage of a relatively low price compared to voice communication. As a result, text messaging has experienced exponential growth in recent times.

Mobile terminals are also increasingly using the Multimedia Message Service (MMS), which is a message service that enables a photo, a moving image (i.e., video), a music file, etc. to be added to a simple message. The MMS is a representative wired/wireless integrated service that combines the advantage of a short message service with the advantage of an electronic mail service. Since the MMS provides multimedia contents, mobile terminal users frequently use the MMS while traveling outside their country of residence.

The MMS operates by configuring text, music, an image, a video clip, link information, etc. in combination, and transmits/receives the same. For instance, a user may transmit a wireless postcard or a picture, a video clip, a video card map, a card, etc. via the multimedia message.

In addition, the mobile terminal provides an instant message function, i.e., a text / MMS message function, to allow users to prepare, send and receive messages via a conversation window.

Generally, a mobile terminal user may express his or her emotion using a symbol in the process of sending and receiving a message. For example, the mobile terminal may be used to express emotion by enabling user selection of a symbol of a predetermined type, and transmitting/receiving multimedia contents such as an emoticon, flash animation, etc.

An ongoing need exists to expand the functionality of mobile terminals and to enhance the user experience. The present invention addresses this need.

### SUMMARY

An aspect of the present invention is to provide an apparatus and a method for extracting a multimedia clip that can be utilized for a message service from multimedia contents pre-stored in a mobile terminal.

Another aspect of the present invention is to provide an apparatus and a method for retrieving a multimedia clip corresponding to an input word while writing a message in a mobile terminal.

An apparatus for writing a message and transmitting the same in a mobile terminal is provided. The apparatus includes a keyword analyzer to analyze an input keyword written in a messaging window. A clip manager retrieves contents corresponding to the analyzed input keyword from pre-stored contents, and extracts and stores the retrieved contents as a multimedia clip that may be included within the message in place of the keyword. The contents can be music / video files pre-stored in the mobile terminal or stored on a remote server. The extracted multimedia clip can correspond to a portion of the music / video contents containing the keyword.

The clip manager can be designed to extract a plurality of multimedia clips corresponding to the keyword from a respective plurality of multimedia contents files that each contain the keyword. This option allows for a plurality of selections to be made available to the user for a given keyword. The user may then select one of the multimedia clips for inclusion in the message.

A method in a mobile terminal for preparing a message to be transmitted is provided. The method includes: receiving a keyword for extracting a multimedia clip; retrieving contents corresponding to the received keyword; and storing the corresponding contents as a multimedia clip that may be included within the message.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings in which:
FIG. 1 is a block diagram illustrating a mobile terminal managing a multimedia clip according to an exemplary embodiment of the present invention;
FIG. 2 is a flowchart illustrating a process for updating a multimedia clip list in a mobile terminal according to an exemplary embodiment of the present invention;
FIG. 3 is a flowchart illustrating a message writing process of a mobile terminal according to an exemplary embodiment of the present invention;
FIG. 4 is a view illustrating a process for extracting a multimedia clip from contents in a mobile terminal according to an exemplary embodiment of the present invention;
FIG. 5 is a view illustrating a process for retrieving a multimedia clip corresponding to a keyword in a mobile terminal according to an exemplary embodiment of the present invention; and
FIG. 6 is a view illustrating a message writing process of a mobile terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Exemplary embodiments of the present invention provide an apparatus and a method in a mobile terminal for using an entirety or a portion of pre-stored multimedia contents files as a multimedia clip as a substitute for a keyword in a message (or as an addition to the keyword). The multimedia clip is provided to achieve an effect similar to an emoticon. A message denotes a message input via a short message service (SMS), a multimedia message service (MMS), email, or a messenger function. The multimedia clip can be represented as a symbol corresponding to a keyword input while a message is written. The clip may be contents such as music vocals (or vocals plus video) for the keyword extracted from a song (or music video). In other implementations, the multimedia clip is purely visual such as a video clip depicting emotion which is extracted from a movie scene, a flash animation, a still image, etc. The keyword can be a single word, a phrase or a sentence.

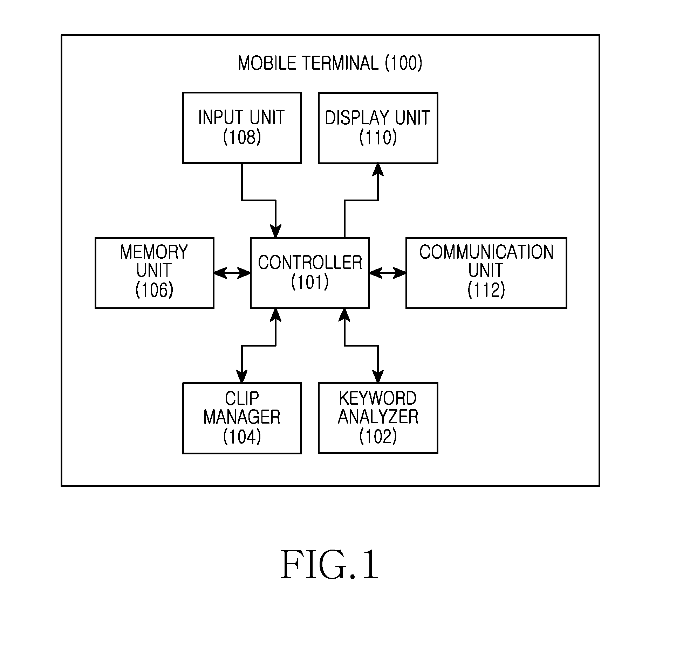

FIG. 1 is a functional block diagram illustrating a mobile terminal, 100, managing a multimedia clip according to an exemplary embodiment of the present invention. Mobile terminal 100 includes a controller 101, a keyword analyzer 102, a clip manager 104, a memory unit 106, an input unit 108, a display unit 110, and a communication unit 112.

The controller 101 controls an overall operation of the mobile terminal. For example, controller 101 performs a process and control for voice communication and data communication. In addition to the general functions, controller 101 runs a process to extract a multimedia clip to be included in a message from pre-stored contents. As mentioned above, the multimedia clip may be contents such as an emoticon, a flash animation, an image, music, etc. that replaces a word input while a message is written.

In addition, the controller 101 can be configured to retrieve a multimedia clip corresponding to a word input by a user, provide a suggestion or selection option for the corresponding multimedia contents to the user, and to control a process of incorporating a multimedia clip selected by the user into a message. For example, when determining that a word of "love" is input by the user, the controller 101 retrieves a multimedia clip including a subtitle, lyrics, and a title in which the word "love" is included, and outputs the retrieved multimedia clip on a message input screen. (Controller 101 cooperates with clip manager 104 and keyword analyzer 102 to carry out these operations, as described further below.) To this end, controller 101 may retrieve a multimedia clip corresponding to the keyword among multimedia clips stored in the memory unit 106, or transmit the keyword to a remote server that manages multimedia clips, and then receive a multimedia clip corresponding to the keyword from the server.

The keyword analyzer 102 is a software or hardware module configured to discriminate a sentence, a phrase, or a word from data input by the user, and to use the discriminated sentence, phrase or word as a keyword for retrieving a multimedia clip. For example, when recognizing that the word "hello" is input by the user, the keyword analyzer 102 uses "hello" as a keyword for retrieving a multimedia clip. In addition, the keyword analyzer 102 may use a sentence related to a word or a sentence input by the user as a keyword for retrieving a multimedia clip. For example, when determining that "hello" or a sentence including "hello" is input, the keyword analyzer 102 may detect a related keyword such as a greeting, separation, encounter, etc.

When implemented as software, keyword analyzer 102 can be a program running on a processor within controller 101. Thus a program representing keyword analyzer 102 can be stored in memory unit 106 and executed by controller 101. The same applies for clip manager 104.

The clip manager 104 is a software or hardware module configured to extract multimedia clips from pre-stored contents, where the extracted clips are typically small portions of larger clips constituting a pre-stored contents file. Clip manager retrieve a multimedia clip corresponding to a sentence or a word input by the user using the keyword determined by the keyword analyzer 102. Once a multimedia clip is so extracted, clip manager 104 temporarily stores the clip for possible inclusion in a MMS message to be transmitted. Clip manager 104 can also be configured to build a local library of multimedia clips every time a new clip is extracted from pre-stored contents, by causing the extracted clip to be stored in a memory unit 106 on a permanent or semi-permanent basis (e.g., until deleted by the user).

In operation, keyword manager 102 provides clip manager 104 with the recognized keyword. Clip manager 104 responds by loading data that enables analysis of pre-stored contents (for example, meta-data of multimedia contents including lyrics of music contents, subtitles of video contents, an image, audio data, video data) to determine whether the contents contain the keyword (or are related to the keyword). In one implementation, clip manager 104 then extracts and stores data of a position in one of the pre-stored contents (e.g., a pointer) corresponding to the keyword as a multimedia clip. Thus, whenever that particular keyword is input in the future, clip manager 104 can immediately retrieve a suitable clip by using the pointer to the corresponding portion of the pre-stored contents. In other implementations, clip manager 104 extracts the actual data of the portion of the larger clip that contains the keyword, and separately stores the extracted data in a dedicated "clips" library in memory unit 106.

When receiving a multimedia clip request for a keyword, clip manager 104 can extract a plurality of clips from a corresponding plurality of contents files, where each clip corresponds to the keyword, and present the plurality of clips as selections for the user. The user can then select among the various clips for incorporation into the message.

If cooperating with a remote server that provides the multimedia clips, the clip manager 104 controls a process of transmitting keywords to the server and retrieving corresponding multimedia clips from the server.

The keyword analyzer 102 and/or the clip manager 104 may be called as another controller(s).

The memory unit 106 includes Read Only Memory (ROM), Random Access Memory (RAM), and a flash ROM. The ROM stores microcodes of programs for processes and control operations run by controller 101, the keyword analyzer 102, the clip manager 104, and various reference data.

The RAM serves as a working memory of the controller 101 and stores temporary data that occur during execution of various programs. The flash ROM stores various updatable data for storage such as a phonebook, calling messages, and received messages. According to an exemplary embodiment of the present invention, the flash ROM stores multimedia clips extracted from pre-stored contents.

The method executed by the keyword analyzer 102 and/or the clip manager 104 may be provided as one or more instructions in one or more software modules stored in the memory unit 106. In that case, the software modules may be executed by the controller 101.

The input unit 108 can be of a physical or virtual type, using physical keys in the former case and virtual keys of a touch screen in the latter. Input unit 108 includes a plurality of function keys such as numerical key buttons of 0 to 9, a menu button, a cancel button, an OK button, a TALK button, an END button, an Internet access button, navigation key buttons (or directional keys), character input keys, etc., and provides key input data corresponding to a key pressed by the user to the controller 101. In addition, the input unit 108 inputs a keyword for retrieving and registering a multimedia clip.

The display unit 110 displays state information occurring during an operation of the mobile terminal 100, characters, moving and still images, etc. The display unit 110 may be a color Liquid Crystal Display (LCD), an Active Matrix Organic Light-Emitting Diode (AMOLED), etc.

A touch sensitive display, called as a touch screen, may be used as the display unit 110. In this situation, touch input may be performed via the touch sensitive display. In addition, according to an exemplary embodiment of the present invention, the display unit 110 displays icons or the like representing selectable commands for retrieving a multimedia clip corresponding to the input keyword.

The communication unit 112 transmits/receives a Radio Frequency (RF) signal of data input/output via an antenna (not shown). For example, during transmission, the communication unit 112 channel-codes and spreads data to be transmitted, and then performs an RF process on the signal to transmit the signal. During reception, the communication unit 112 converts a received RF signal into a baseband signal, and despreads and channel-decodes the baseband signal to recover data. In addition, according to an exemplary embodiment of the present invention, in the case where the mobile terminal 100 cooperates with a server for managing a multimedia clip, the communication unit 112 transmits a keyword for retrieving the clip to the server.

As mentioned above, the functions of the keyword analyzer 102 and the clip manager 104 may be performed by the controller 101 of the mobile terminal running corresponding programs. In this case, the separate configuration and illustration of the keyword analyzer 102 and the clip manager 104 are for exemplary purposes and for convenience of description.

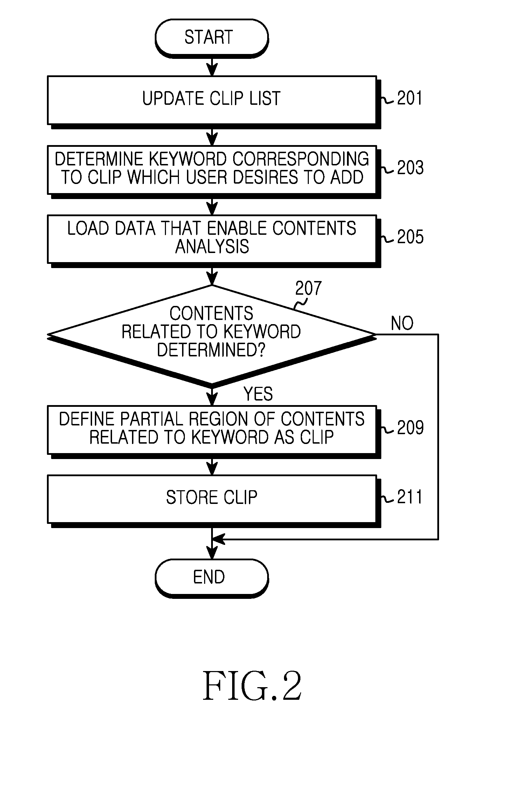

FIG. 2 is a flowchart illustrating a process for updating a multimedia clip list in a mobile terminal according to an exemplary embodiment of the present invention.

In this embodiment, a library of stored multimedia clips corresponding to keywords (or a library of stored pointers to multimedia clips) is stored in memory unit 106. The multimedia clip denotes a portion (a partial reproduction region of contents) of data forming the contents. In the list updating process, the mobile terminal first enters a clip list updating mode or a messaging mode in step 201. Here, the updating of the multimedia clip list denotes adding, deleting, or changing a multimedia clip for the keyword. The keyword denotes a word, sentence or phrase included when a user writes a message using the mobile terminal.

At step 203, an input keyword is discerned, corresponding to a multimedia clip to be retrieved and added to the message. That is, the user desires to transmit the corresponding multimedia clip in place of the keyword to a counterpart user once the user writes a message.

The process then proceeds to step 205 to load data that enables contents analysis. Here, the data that enables contents analysis may be meta-data of multimedia contents including lyrics of music contents, subtitles of video contents, an image, audio data, and video data. For example, a user of the mobile terminal may determine reproduction positions of a word included in lyrics data and music contents corresponding to the word using the lyrics data.

At step 207, it is determined whether contents related to the keyword is located. That is, a determination is made as to whether data including the keyword exist among the data loaded in step 205.

When determining that the contents related to the keyword do not exist in step 207, the mobile terminal ends the present algorithm.

When the contents related to the keyword do exist in step 207, the mobile terminal proceeds to step 209 to define a partial region of the contents related to the keyword as a multimedia clip, and proceeds to step 211 to store the multimedia clip. That is, the mobile terminal extracts a multimedia clip corresponding to the keyword from pre-stored audio, video, image contents, etc. to store the same, and uses the multimedia clip when writing a message. Actual contents of the multimedia clip are stored for inclusion in the written message, since a file containing the clip is to be transmitted to the counterparty.

The extracted multimedia clip, in addition to being stored as part of the message, is also stored or referenced in a dedicated library in mobile terminal 100. This can be done by transferring the actual multimedia content data from the partial region of the pre-stored contents to another portion of the memory unit 106 dedicated for storage of the shorter multimedia clips that correspond to the keywords. Alternatively, just a list of pointers is stored in the library, where the pointers point to the corresponding portions of the contents, i.e., the partial regions containing the keywords.

Once the multimedia clip(s) is stored, the algorithm of FIG. 2 ends.

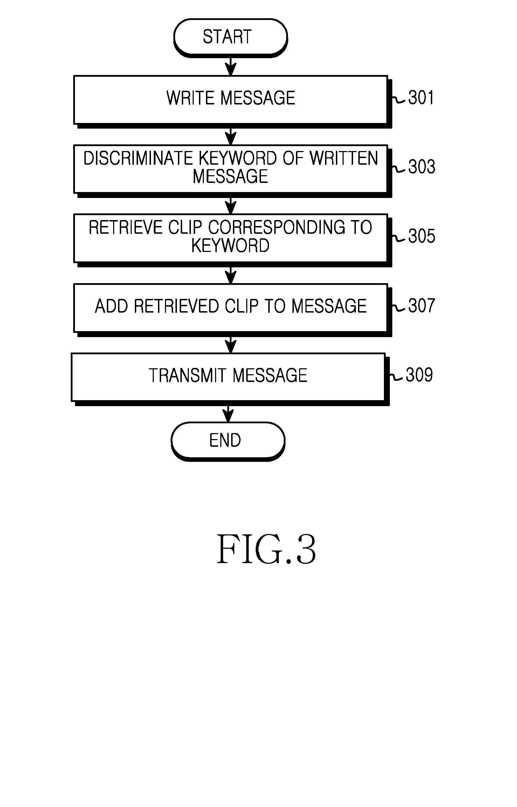

FIG. 3 is a flowchart illustrating a message writing process of a mobile terminal according to an exemplary embodiment of the present invention. The mobile terminal enters a message write process mode in step 301 via suitable commands. Here, the message write process denotes writing a message via a short message service, a multimedia message service, an electronic mail, or a messenger function.

The mobile terminal proceeds to step 303 to discriminate a keyword in the written message, and proceeds to step 305 to retrieve a multimedia clip corresponding to the keyword.

Here, the mobile terminal discriminates a word in a sentence input to a message input window to use the word as a keyword for retrieving a multimedia clip. In addition, the mobile terminal may directly store a multimedia clip extracted via the process of FIG. 2 or extract a multimedia clip from currently stored contents at a point of discriminating the keyword.

The mobile terminal proceeds to step 307 to add a retrieved multimedia clip to the message input window, and proceeds to step 309 to transmit a message to a counterpart user.

That is, the mobile terminal provides the multimedia clip corresponding to a word written by a user to a counterpart user. The multimedia clip is extracted from contents stored in the mobile terminal as described above.

After that, the mobile terminal ends the present algorithm.

The above-described processes of FIGs. 2 and 3 involve extracting a multimedia clip for a keyword from contents pre-stored within the mobile terminal. In alternative implementations, multimedia clips corresponding to keywords can be retrieved from a remote server. That is, the server stores multimedia clips for a plurality of keywords, and in case of discriminating a keyword, the mobile terminal may request the server to transmit a multimedia clip for the keyword and may receive the multimedia clip.

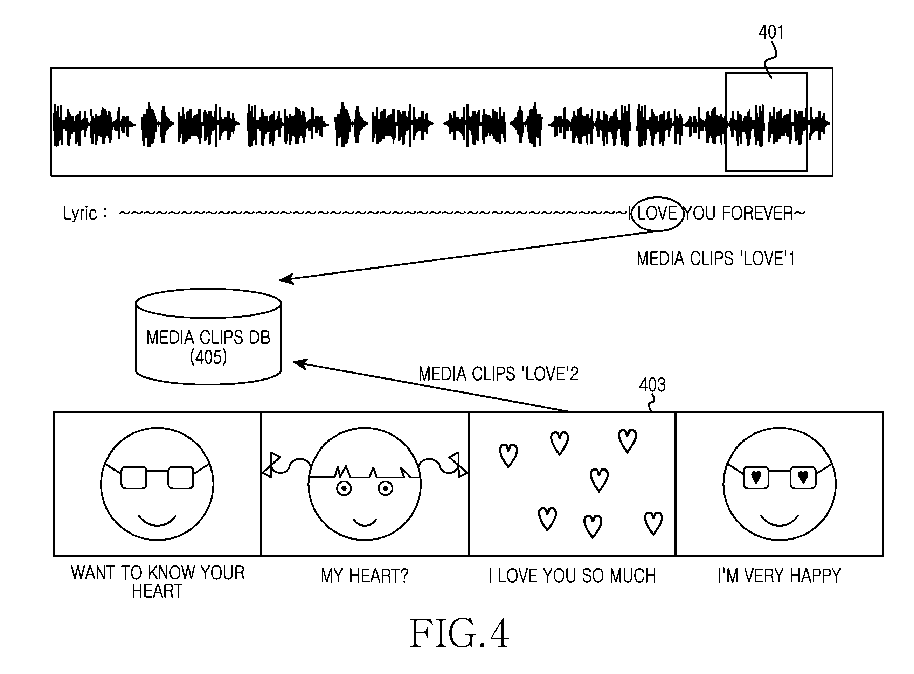

FIG. 4 is a diagram illustrating a process for extracting a multimedia clip from contents in a mobile terminal according to an exemplary embodiment of the present invention. The contents may include audio contents, video contents, image contents, etc.

First, the mobile terminal discriminates contents including a specific keyword input by a user to extract a multimedia clip. The extracted multimedia clip may be at least one frame of a music file, a music video file, etc. that includes the keyword.

That is, the mobile terminal loads lyrics data of audio contents and then determines a region including the keyword to store the same as a multimedia clip. At this point, the mobile terminal may determine a section where lyrics corresponding to the keyword are reproduced or determine a predetermined section from a point where lyrics corresponding to the keyword is reproduced.

For example, in the case where the mobile terminal determines a keyword of "love", the mobile terminal determines a position where a word of "love" exists from lyrics of audio contents and subtitles of video contents, and stores (405) data of the determined position (a sound source 401 of the section where the lyrics of "love" are reproduced, and a frame 403 of a section where a subtitle of "love" is reproduced) as a multimedia clip. Accordingly, in the case where a user of the mobile terminal inputs a word of "love", the mobile terminal may use a sound source including "love" or a frame including "love" as an emoticon. That is, as illustrated, the mobile terminal determines that lyrics of "I love..." has been included in lyrics of audio contents, and then may store a sound source including a word of "love" as a multimedia clip. In addition, the mobile terminal sets a scene including "I love" (lyrics "I love you") as a multimedia clip among scenes where a man and a woman have a conversation.

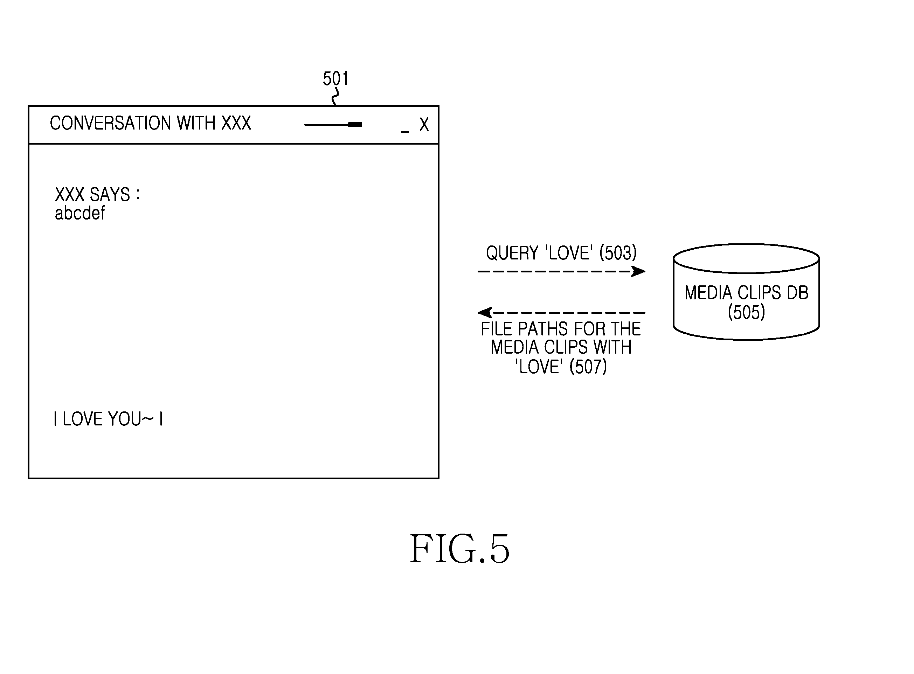

FIG. 5 is a view illustrating a process for retrieving a multimedia clip corresponding to a keyword in a mobile terminal according to an exemplary embodiment of the present invention. As shown, the mobile terminal transmits/receives a message to/from a counterpart user via a messenger function 501.

At this point, the mobile terminal determines a word input by a user to use the same as a keyword for retrieving a multimedia clip.

That is, as illustrated, when a word of "love.." is input, the mobile terminal determines (503) whether a multimedia clip corresponding to "love" is stored in a media clip database 505 using an input word as a keyword. When determining that the multimedia clip corresponding to "love" is stored, the mobile terminal determines (507) a storage address of the multimedia clip corresponding to the keyword to provide the same to a list of multimedia clips. As described above, multimedia clips retrieved in embodiments of the present invention are not multimedia clips provided in advance by the mobile terminal, but rather are clips extracted from contents stored in the mobile terminal depending on a keyword. This technique allows a user to express his or her emotion characteristically.

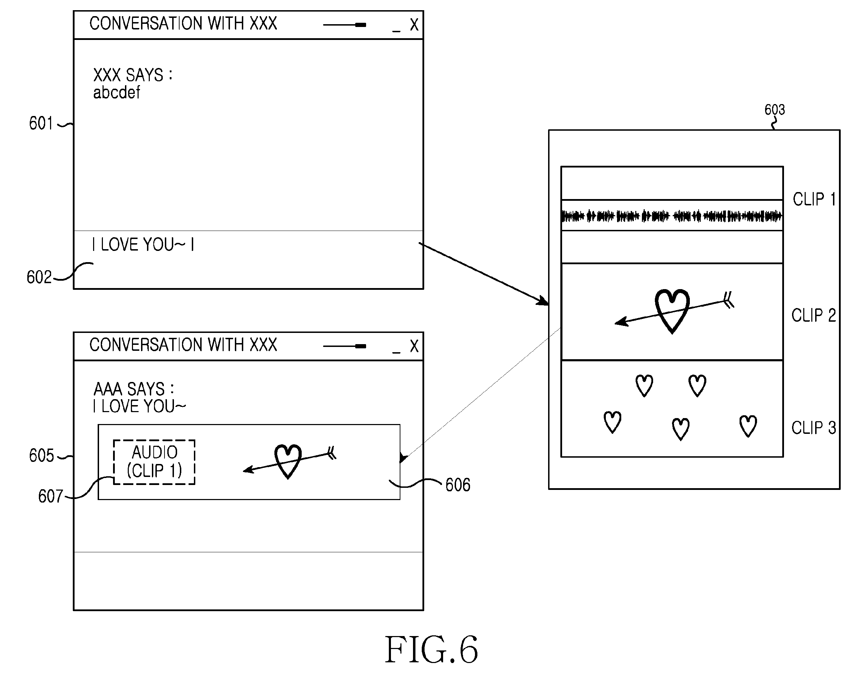

FIG. 6 illustrates exemplary display screens to explain a message writing process of a mobile terminal according to an exemplary embodiment of the present invention. The mobile terminal transmits/receives a message to/from a counterpart user via a messenger function using message display fields 601 and 602. In a text / MMS conversation between the mobile terminal user and a third party XXX, display field 601 displays the text received from the third party. In field 602, the mobile terminal user writes a message with the words I LOVE YOU. Thereafter, the user initiates a multimedia clip retrieval mode to either replace the words with a multimedia clip, or to augment the message with the multimedia clip. This mode can be initiated by a suitable command, for example, by first highlighting the selected words to be replaced, and then selecting a predetermined icon on the touch display screen to enter the mode. Other options include pressing a pre-determined function key on an actual or virtual keypad or using a voice command.

When the multimedia clip retrieval mode is entered, the mobile terminal determines the word(s) selected for replacement or augmentation as a keyword for retrieving a multimedia clip. That is, as illustrated, when a word "love.." or I LOVE YOU is selected for replacement, the mobile terminal determines whether at least one multimedia clip corresponding to "love" is already stored in the media clips library.

When determining that the multimedia clip corresponding to "love" is stored, the mobile terminal provides a list of multimedia clips corresponding to the keyword.

That is, the mobile terminal outputs, as depicted by screen603, a list of a audio clips, video clips and / or A/V clips (e.g. music video) as multimedia clips corresponding to "love". These are illustrated as CLIP 1, CLIP 2 and CLIP 3 in screen 603. Accordingly, a user of the mobile terminal selects a clip which the user desires to incorporate into a message from the output clip list, and the mobile terminal incorporates a multimedia clip selected by the user into the message. This is illustrated in display screen 605, which shows an image of CLIP 2 (heart with arrow through it) representing "love" or I LOVE YOU in message field 606. This image can then be promptly transmitted to the third party via the standard MMS send command on the mobile terminal as a substitute for the words typed by the user, or as additional information.

If an audio clip or AV clip is selected, a visual representation 607 of the audio clip can be contained in the MMS message field 606, and then transmitted to the third party. When the third party receives the message, they can execute the audio file in a conventional manner, e.g., by selecting the representation for playback using a touch screen or the like.

In an alternative implementation, the user can initiate the word replacement mode with suitable command before typing begins in the MMS message field 602. In this case, during user typing, as a word or phrase is recognized by the system, corresponding clip selections are displayed on another portion of the screen. The user can then select a corresponding clip at any time during the typing process, to be substituted for the word in the MMS message field and subsequently transmitted.

By repeating either of the above-described processes for additional words or phrases, entire sentences or paragraphs can be constructed as a sequence of different multimedia clips, each representing a portion of the written message. The sequence of clips configured for sequential playback in this manner can constitute an interesting, eclectic playback message.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

As described above, the present invention is intended for using contents stored in advance as a visual or audio emoticon in a mobile terminal. According to the present invention, a multimedia clip corresponding to a keyword is extracted from the contents stored in advance and stored, and then a multimedia clip corresponding to a word input while a user writes a message is retrieved and transmitted. Accordingly, the user of the mobile terminal may variously use a multimedia clip(s) representing his emotion or written message.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present invention should not be limited to the above-described embodiments but should be determined by not only the appended claims but also the equivalents thereof.

## Claims

1. An apparatus in a mobile terminal for preparing a message to be transmitted, the apparatus comprising:
a keyword analyzer to analyze an input keyword; and
a clip manager to retrieve contents corresponding to the analyzed input keyword from pre-stored contents and extracting and storing the retrieved contents as a multimedia clip that may be included within the message.

2. The apparatus of claim 1, further comprising a controller configured to incorporate the extracted multimedia clip into the message while a message function is used;
wherein the keyword analyzer discriminates the keyword input while the message function is used, and
the clip manager retrieves the multimedia clip for the keyword discriminated by the keyword analyzer.

3. The apparatus of claim 2, wherein the clip manager retrieves the multimedia clip for the keyword from a remote server.

4. The apparatus of claim 2, wherein the clip manager extracts the multimedia clip from at least music contents pre-stored in the mobile terminal, the extracted multimedia clip corresponding to a portion of the music contents containing the keyword.

5. The apparatus of claim 1, wherein the clip manager loads data associated with the contents that enable analysis of the pre-stored contents, and then determines whether the loaded data comprise the keyword, or determines the corresponding contents using a related keyword of the keyword.

6. The apparatus of claim 5, wherein the data that enable analysis of the contents stored in advance comprise at least one of lyrics of audio contents, subtitles of video contents, and meta-data of multimedia contents.

7. The apparatus of claim 1, wherein the keyword analyzer is configured to analyze keywords in the form of a phrase or a sentence in addition to analyzing keywords comprised of a single word.

8. The apparatus of claim 2, wherein the clip manager extracts a plurality of multimedia clips corresponding to the keyword from a respective plurality of multimedia contents files that each contain the keyword, and the controller is further configured to:
control a display of a list of the plurality of extracted multimedia clips; and
receive a user selection for one of the clips in the list, and incorporate the selected clip within the message.

9. A method for preparing a message to be transmitted in a mobile terminal, the method comprising:
receiving a keyword for extracting a multimedia clip;
retrieving contents corresponding to the received keyword; and
extracting and storing the corresponding contents as a multimedia clip that may be included within the message.

10. The method of claim 9, further comprising:
discriminating the keyword which is input while a message function is used;
retrieving the multimedia clip for the discriminated keyword; and
adding the multimedia clip for the keyword to a message to transmit the same.

11. The method of claim 10, wherein retrieving the multimedia clip for the keyword using the discriminated word as the keyword comprises:
cooperating with a server that provides a multimedia clip for the keyword to transmit the keyword; and
receiving the multimedia clip for the keyword from the server.

12. The method of claim 10, wherein the retrieving of the contents corresponding to the received keyword comprises:
loading data that enable analysis of pre-stored contents; and
determining whether the loaded data comprise the keyword or determining corresponding contents using a related keyword of the keyword.

13. The method of claim 12, wherein the data that enable analysis of the pre-stored contents comprise at least one of lyrics of audio contents, subtitles of video contents, and meta-data of multimedia contents.

14. The method of claim 9, wherein extracting comprises extracting a plurality of multimedia clips corresponding to the keyword from a respective plurality of multimedia contents files that each contain the keyword, and the method further comprising:
displaying a list of the respective plurality of extracted multimedia clips;
and
receiving a user selection for one of the clips in the list, and incorporating the selected clip within the message.
